# EUROPEAN PATENT APPLICATION

(11) **EP 1 004 281 A2**
(43) Date of publication of application: **31.05.2000**
(21) Application number: 99203763.0
(22) Date of filing: 10.11.1999
(51) Int. Cl.: A61C 11/00

(54) **Support fixture for dental articulators**

(30) Priority: 23.11.1998 IT RE980116
(71) Applicant: Canovi, Isacco, 42100 Reggio Emilia (IT)
(72) Inventor: Canovi, Isacco, 42100 Reggio Emilia (IT)
(74) Representative: Corradini, Corrado

(57) **Abstract**

The fixture comprises a first base element (10) able to rest stably on a support surface (S) and having means (15) for its resting on the support surface (S) which are able to vary the inclination of the element (10) in the vertical plane of symmetry; a second base element (20) is also provided defining a resting surface (210) for the articulator and provided with fixing means (30) able to fix the articulator rigidly to said resting surface (210); said second base element (20) is secured to the first base element (10) such that its position can be varied by rotation about an axis substantially perpendicular to said resting surface (210).

## Description

This invention relates generally to the use of dental articulators.

Dental articulators are known devices comprising substantially an upper jaw and a lower jaw hinged together by a complex articulation device to reproduce the movements of the dental arches. The models of the patient's arches are fixed on the two jaws to undergo the work involved in forming partial or total prostheses for restoring the dental occlusion suitable for mastication.

In making prostheses it is usually necessary to view the prosthesis being worked in various orientations, namely from the front, from the rear, from the two sides, and in plan.

An object of the invention is to provide a support which enables the user to orientate the articulator in stable equilibrium and in suitable relationship with the position of the eyes, to enable prostheses to be viewed in the required orientations, and to easily and rapidly change this orientation.

This and further objects are attained by the fixture of the invention as characterised in the claims.

The invention is described in detail hereinafter with the aid of the accompanying figures, which illustrate a non-exclusive enmbodiment thereof.

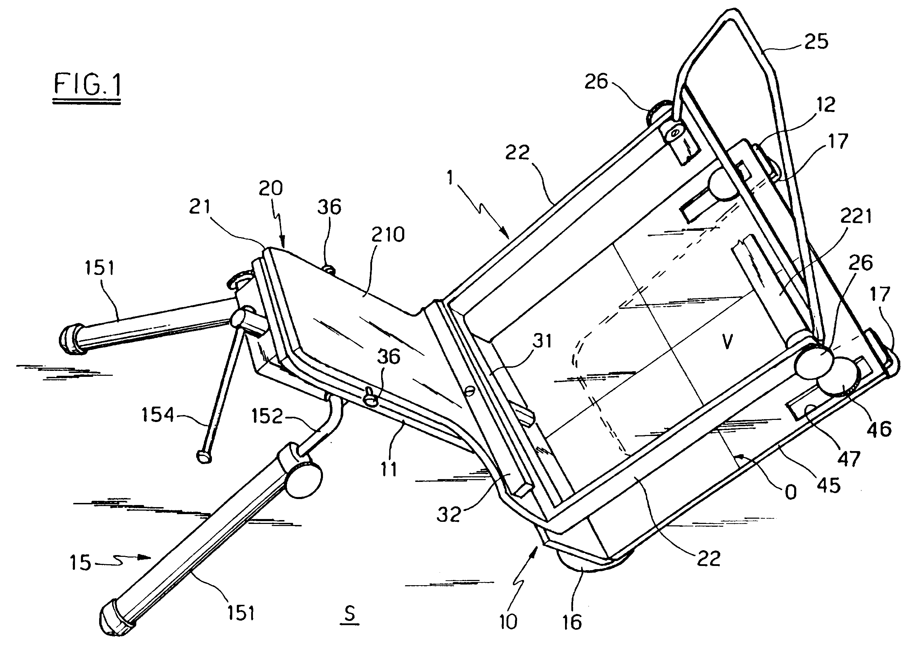

Figure 1 is a perspective view of the fixture of the invention.
Figure 2 is a side view of the fixture of Figure 1, on which a dental articulator has been applied.
Figure 3A is a side view of the fixture arranged with the occlusal plane parallel to the plane of collimation with the user's eyes, orientated to provide a front facing view of the arches.
Figure 3B shows the same view as Figure 3A, but with the articulator orientated to provide a side view of the arches.
Figure 3C shows the same view as Figure 3A, but with the articulator orientated to provide a rear facing view of the arches.
Figure 3D is a side view of the fixture arranged with the plane of the lower arch horizontal and the plane of the upper arch vertical.
Figure 3E is a side view of the fixture arranged with the plane of the upper arch horizontal and the plane of the lower arch vertical.
Figure 3F is a side view of the fixture arranged with the lower arch inverted and its plane parallel to the plane of collimation with the user's eyes.
Figure 4 is a side view (as Figure 2) of a second embodiment of the fixture of the invention.
Figure 4A is a side view of the fixture of Figure 4 in a position rotated from the preceding.
Figure 5 is a plan view of Figure 4 from above, without the articulator 50.

The fixture of the invention, indicated overall by 1, is provided to support a dental articulator 50 of known type. This comprises substantially a lower jaw 51 composed of a support base 52 and two vertical columns 53 fixed to the rear edge of the rear base 52, and an upper jaw 55 composed of an upper base 56 and a horizontal rear pin 57 fixed to the rear end of the base 56. The ends of the pin 57 are secured to two articulation devices 58, of known type shown schematically in the figures, which imitate the mandibular articulations. The models 61 and 62 of the lower arch and of the upper arch are applied to the bases 52 and 56 respectively.

A vertical rod 59 of adjustable length is fixed to the upper base 56 and has its lower end resting on a stop 60 fixed to the lower base 52 to determine the position of the occlusal plane P of the two arches 61 and 62. The occlusal plane P is normally parallel to the plane in which the articulator rests.

The fixture of the invention comprises a first base element 10 arranged to rest stably on a support surface S. The element 10 comprises a first substantially flat component 11 formed in particular from a relatively thin flat T-shaped plate arranged to rest on the support surface S in a normally horizontal position, and a second substantially flat component 12, in particular formed from a thin flat rectangular plate (having a wide upper discharge aperture) rigidly fixed to the rear edge of the first component 11 in a position perpendicular to the first component 11, to form an L.

Said first base element 10 comprises means 15 for resting on the support surface S such as to enable the inclination of the element 10 in the vertical plane of symmetry to be varied.

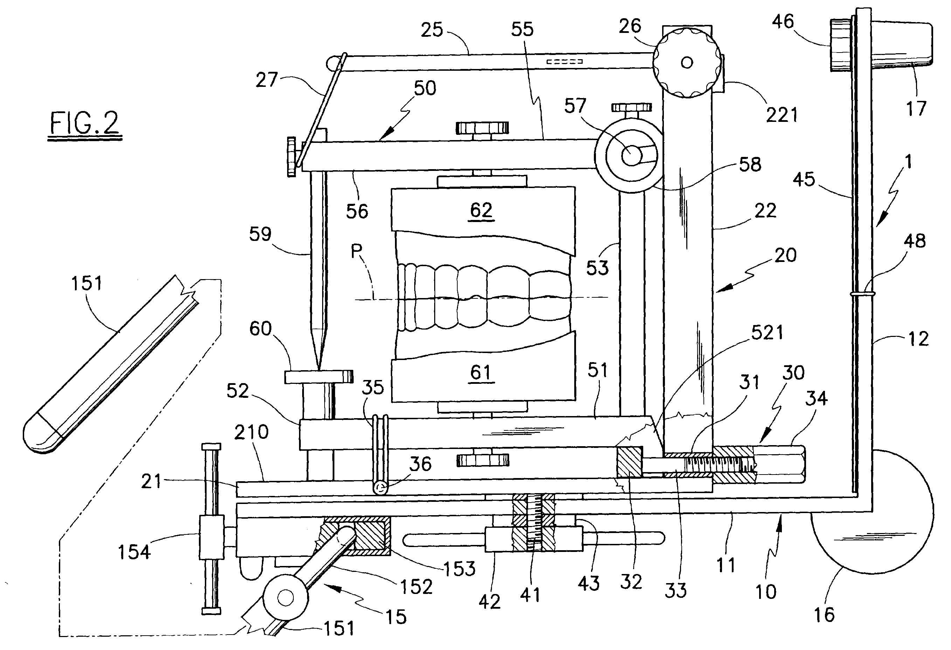

In the embodiment shown in Figure 2, said resting means 15 comprise a pair of feet 151 connected together by a common transverse horizontal shank 152 hinged to the front end of the first component 11. Clamping means 153 are applied to the component 11 and are operable by a front lever 154 to clamp the shank 152 in order to lock the angular position of the feet 151. The feet are mounted telescopically to the shank 152, to enable their length to be varied.

The second component 12 is arranged to rest on the support surface S to define a second resting base for the fixture, with stable equilibrium. Specifically, rear feet 16 are provided fixed to the joining edge between the first component 11 and the second 12, to act as a support when the fixture rests either via the first component 11 or via the second component 12. On the upper edge of the second component 12 there are fixed two upper feet 17 projecting rearwards.

The fixture 1 can rest on the surface S either via the adjustable feet 151 and the rear feet 16 (see Figures 3A-3D), or via the rear feet 16 and the upper feet 17 (see Figure 3E).

The fixture 1 comprises a second base element 20, which defines a resting surface 210 for the articulator 50 and is provided with fixing means 30 to rigidly fix the articulator to said resting surface 210.

The second component 12 is secured to the first base element 10 such that its position can be varied by rotation about an axis substantially perpendicular to the resting surface 210.

Said second base element 20 comprises a substantially flat member 21 in particular formed from a relatively thin flat plate of T-shape, lying parallel to the first component 11 and having its upper surface defining said resting surface 210 on which the articulator 50 bears.

This flat member 21 is secured to the first component 11 with the facility for rotation about an axis substantially perpendicular to the resting surface 210.

In the embodiment shown in Figure 2, to connect together the member 21 and the first component 11 there is provided a threaded pin 41 fixed to the flat member 21 and projecting downwards with its axis perpendicular to the surface 210. The pin 41 passes through a hole provided in the first component 11 and projects below it where it engages a threaded hole provided in a nut with knob 42, positioned below the first component 11. Suitable washers 43 are interposed between the elements 21, 11 and 42.

The pin 41 defines the pivot about which the flat member 21 rotates when resting on the first component 11. By rotating the knob 42 clockwise, the member 21 and the first component 11 are tightened together to fix their relative position.

In a preferred embodiment, the fixing means 30 comprise a clamping means arranged to clamp a pair of feet of the articulator 50. In detail, in the embodiment shown in Figure 2, this clamping means comprises a rear horizontal crosspiece 31 fixed to the rear edge of the member 21 and a second horizontal crosspiece 32 positioned to the front of the crosspiece 31 and resting on the surface 210. A threaded pin 33 is fixed to the front crosspiece 32 and projects horizontally rearwards, passing through a hole provided in the rear crosspiece 31. Its rear end projects beyond this crosspiece 31 and engages a nut 34 which reacts against the crosspiece itself. On rotating the nut clockwise, the crosspiece 32 is pulled towards the crosspiece 31, to forcibly clamp together the rear feet 521 provided below the lower base 52, and by which the articulator rests on the surface 210.

The fixing of the lower base 52 to the flat member 21 is completed, for example, by an elastic tie 35 which is connected to two lateral pegs 36 fixed to the member 21, and passes over the lower base 52 of the articulator.

Different connection means can be provided, for example means which secure the lower base 52 of the articulator to the flat member 21 by vertical action.

In a preferred embodiment, said second base element 20 comprises a pair of uprights 22 perpendicular to the resting surface 210 and rigidly fixed at their lower end to the rear edge of the flat member 21, to project upwards. The upper ends of the uprights 22 are connected together by a stiffening crosspiece 221.

A support bracket 25, projecting forwards above the upper jaw 55, is hinged about a horizontal transverse axis to the upper ends of the uprights 22. The angular position of the bracket 25 to the uprights 22 can be varied and locked, the bracket 25 being arranged to rest on the support surface S to define at least one resting point positioned to the front of the second component 12 to define, together with the upper part of the second component 12, a third resting base with stable equilibrium on the surface S for the fixture plus articulator.

In detail, the support bracket 25 consists of a rod bent to form an arc projecting forwards from the uprights 22 to define, with its front end, a resting point for the case in which the fixture is used inverted, as shown for example in Figure 3F. The other resting points are provided in this case by the upper feet 17 positioned at the upper end of the second component 12.

The ends of the rod 25 are hinged to the uprights 22 and locked by manually operable screws with knobs 26 to lock the rod 25 in the required angular position.

The support bracket 25 also serves to support the upper jaw 55 in an adjustable raised position, for example by securing this jaw to it by a usual elastic tie 27.

In a preferred embodiment a flat screen 45 is provided adjacent to the second component 12 of the first base element 10 and perpendicular to the vertical plane of symmetry and to the occlusal plane P, the screen comprising a vertical line V positioned on its intersection with said plane of symmetry, and a horizontal line O adjustably positioned on its intersection with the occlusal plane P.

In particular, the horizontal line O is defined by a usual thin elastic band 48 passing taut about the screen 45. The position of this elastic band can be changed at will to vary the position of the line O. In one embodiment, the screen 45 is secured to the second component 12 by two screws 46 with relative operating knob which pass through two slots 47 provided in the screen, to enable the position of the screen 25 and hence of the lines V and O to be varied in the plane of the screen.

The surface of the screen 45 can be suitably treated and coloured to highlight the two lines V and O and improve the vision of the prostheses undergoing work.

In use, the articulator 50 is firstly rested on the surface 210 and is then fixed to the member 21 by the fixing means 30.

Hence by adjusting the angular position and/or the length of the adjustable feet 151, the user can incline the first component 11 and hence the resting surface 210 at will, to arrange the occlusal plane in the most suitable position to facilitate work on the lower and upper arches 61 and 62. In particular, the occlusal plane P can be positioned parallel to the plane of collimation with the user's eyes R (as shown in Figure 3A).

By simply pressing with the hand, the upper arch 62 can be pushed downwards, overcoming the force of the tie 27 (as shown by full lines in Figure 3A). In contrast, on releasing the tie 27 the upper arch 62 is pulled upwards (as shown by dashed lines in Figure 3A).

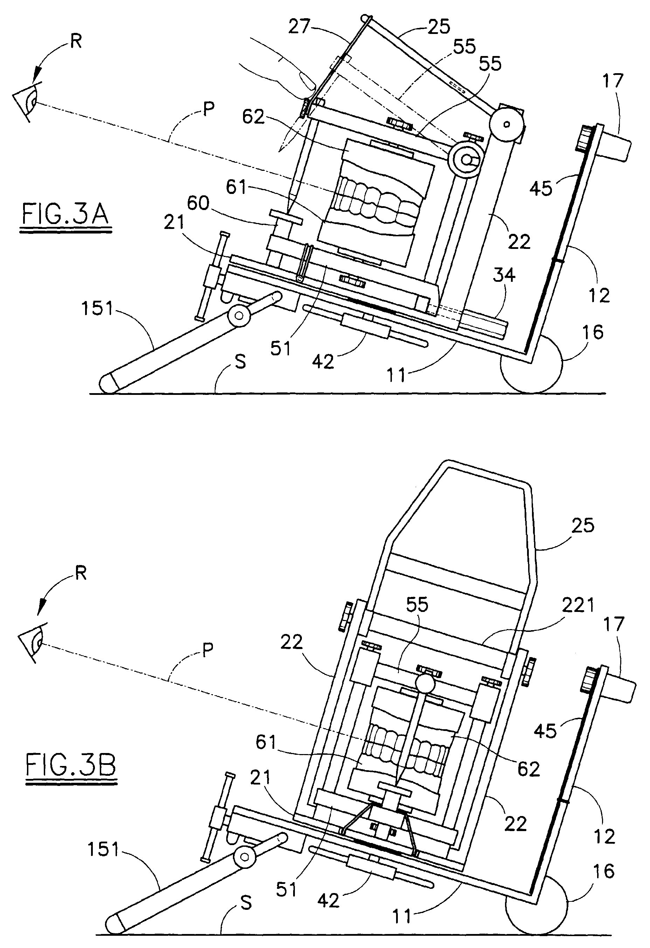

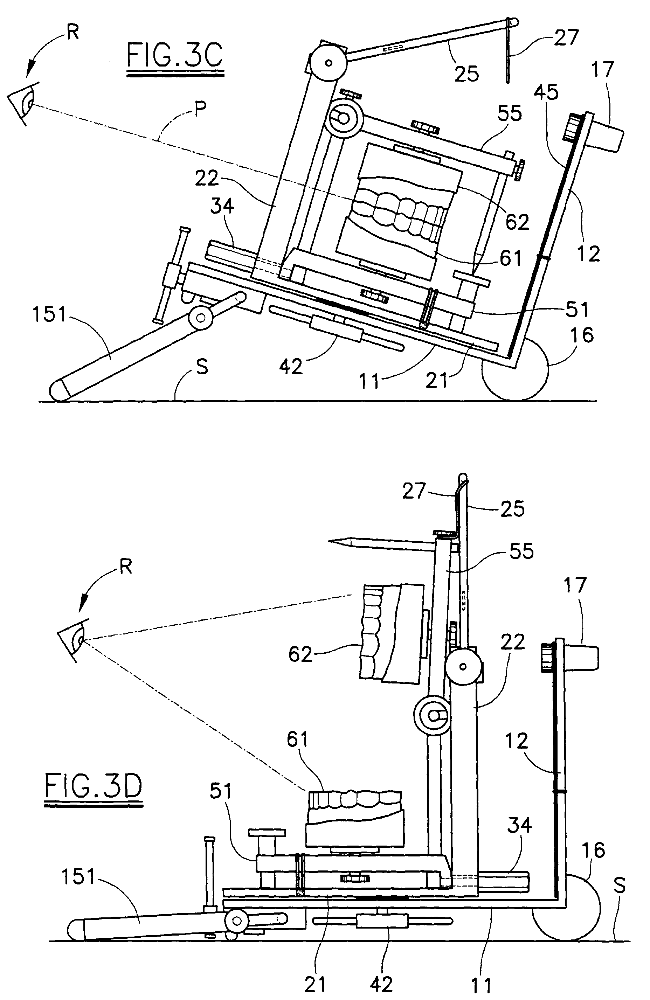

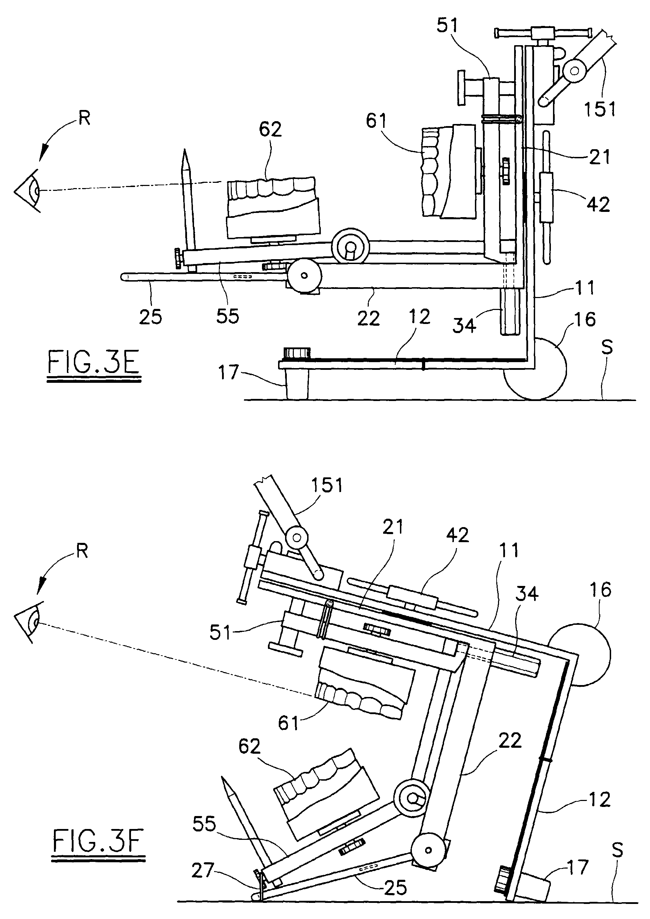

By manually rotating the second base element 20 about the pin 41, the articulator 50 can be orientated to provide either of the side views (as shown in Figure 3B) or the rear view (as shown in Figure 3C), or in any other orientation about the axis of the pin 41, while maintaining the occlusal plane P always parallel to the plane of collimation with the user's eyes R.

By reducing to zero the inclination of the first component 11 to the surface S, the lower arch 61 is positioned horizontally. The view of the upper arch 62 in a vertical position can be obtained by rotating the support bracket 25 into a substantially vertical upward position, so that the arch 62 secured to the bracket 25 is also brought into a vertical position (as shown in Figure 3D).

Instead of the first component 11, the second component 12 can be rested on the support surface S (then rotated the fixture through 180° about a vertical axis). This positions the lower arch vertically. Then by bringing the support bracket 25 into a horizontal or nearly horizontal position, the upper arch 62 can be positioned horizontally and upwardly inverted (as shown in Figure 3E).

The fixture 1 can also be inverted to rest on the surface S via the upper feet 17 and the support bracket 25. In this configuration the lower arch 61 can be arranged in a position parallel to the plane of collimation with the user's eyes R and facing downwards (as shown in Figure 3F). The inclination of the fixture to the surface S can be varied at will by varying the inclination of the support bracket 25.

Summarizing, with the fixture of the invention the operator can position the articulator in numerous stable positions, and in particular in all the positions normally used by the operator, with reference to the occlusal plane and the position of the arches, to obtain a comfortable view of the parts being worked.

These positions can also be quickly and easily varied.

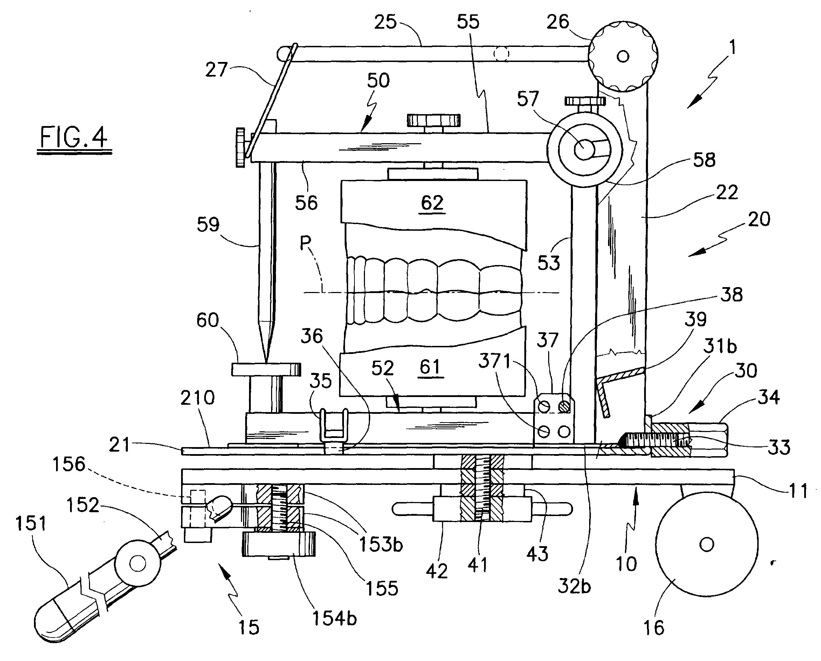

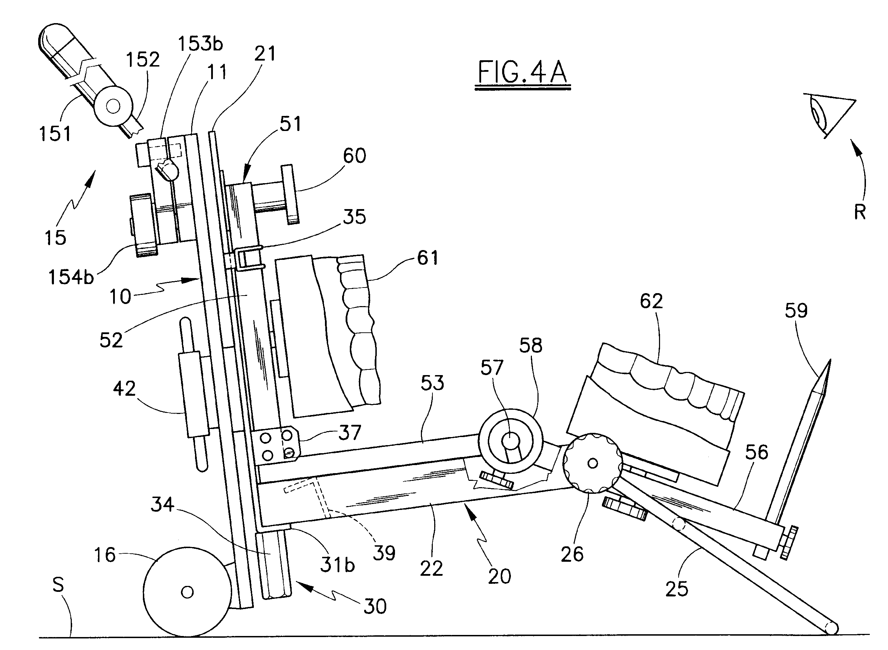

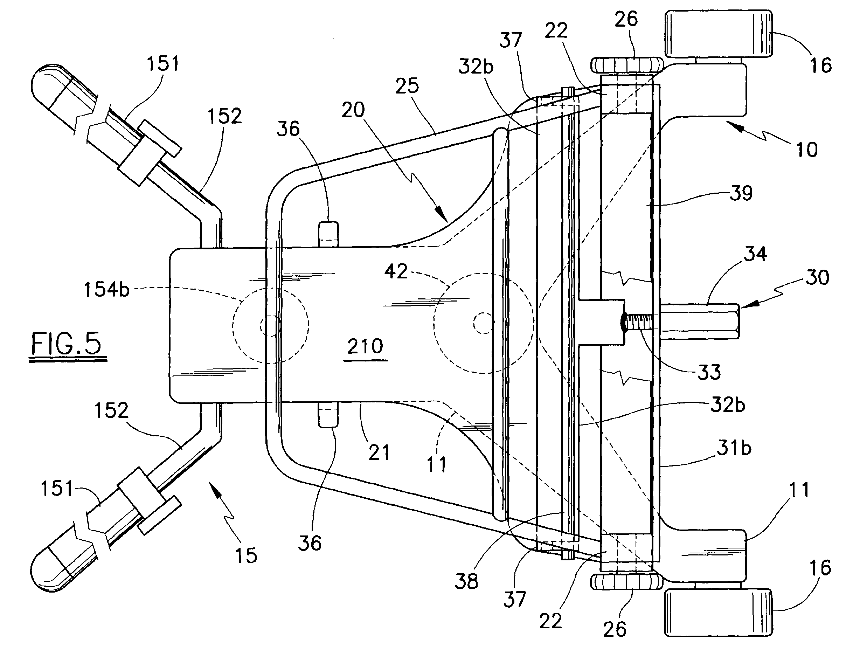

Figures 4, 4A and 5 show a second embodiment of the invention, simplified compared with the preceding, in which the same reference numerals indicate elements equal to those of the first embodiment.

This second embodiment differs from the first, in particular in that the first base element 10 does not comprise the second component 12, but only the first component 11.

The support bracket 25 can be rotated until forming an angle of about 180-300 degrees to the uprights 22 and hence invert the fixture of the invention, together with the articulator 50, so that it rests on the surface S via the feet 16 and the support bracket 25 (as shown in Figure 4A). In this manner, the upper arch 62 for example can be rotated into a position such that the operator can view it inverted, both horizontally and inclined.

In Figures 4 and 5 a constructional modification has been made to the clamping means for locking the angular position of the feet 15. Two mutually superposed flat elongate grips 153b are provided, pulled together by a front pin 156 to clamp the horizontal shank 152. The upper grip 153b is fixed to the lower surface of the first component 11, a screw 155 of vertical axis, operated by a handwheel 154b, being provided to pull the two grips 153b together to clamp the shank 152 and hence lock the position of the feet 15 relative to the first base element 10.

In Figures 4 and 5, said fixing means 10 for rigidly fixing the articulator to said resting surface 210, comprise a clamping means for clamping either the rear feet 521 or a pair of columns 53 of the articulator 50 (if the articulator base 52 is without the rear feet 521).

In detail, there is provided a horizontal crosspiece 32b which rests on the resting surface 210 of the second base element 20 and is pulled rearwards by screw means consisting of a threaded pin 33 with nut 34. A rear horizontal crosspiece 31a fixed to the rear edge of the member 21 is provided with a hole through which the threaded pin 33 passes, its rear end projecting beyond the crosspiece 31a and engaging with the nut 34 which reacts against the crosspiece. The front end of the threaded pin 33 is fixed to the horizontal crosspiece 32b positioned in front of the crosspiece 31b. The crosspiece 32b is flat and carries at its two ends two upwardly projecting lugs 37 positioned external to the two sides of the articulator base 52 and having one or more holes 371 through which a rod 38 is inserted. In the embodiment shown in the figures, four holes 371 are provided, positioned two above and two below.

If the base 52 is without feet, as shown in the figures, the base itself rests on the flat crosspiece 32b, while the rod 38 is positioned through one of the two higher holes, above the base 52 and to the front of the columns 53. If the base 52 is provided with the feet 521, the rod 38 can be positioned through one of the two lower holes, below the base 52 and to the front of the feet 521. Two holes are provided above and below to be able to accommodate columns or feet of different thickness.

Above and parallel to the crosspiece 31b there is a second horizontal crosspiece 39 joined to the uprights 22 and having a front abutment edge against which the articulator columns 53 rest. Consequently by operating the nut 34 the crosspiece 32b is pulled rearwards to forcibly clamp the columns 53 between the rod 38 and the crosspiece 39, hence securing the articulator to the resting surface 210. The crosspiece 39 defines a line of contact with the articulator which lies at a higher level than the points of contact of said clamping means (in particular of the rod 38) with the rear feet 521 of the articulator, or with the pair of columns 53 of the articulator. Consequently the action of the clamping means produces a pair of forces to urge the front part of the articulator downwards against the surface 210 of the flat member 21, hence completely securing the articulator to the second element 20. In this case the elastic tie 35 can be dispensed with.

Numerous modifications of a practical and applicational nature can be made to the invention, but without leaving the scope of the inventive idea as hereinafter claimed.

## Claims

1. For dental articulators, a support fixture characterised by comprising:
a first base element (10) able to rest stably on a support surface (S) and having means (15) for its resting on the support surface (S) which are able to vary the inclination of the element (10) in the vertical plane of symmetry, and
a second base element (20) defining a resting surface (210) for the articulator and provided with fixing means (30) able to fix the articulator rigidly to said resting surface (210),
said second base element (20) being secured to the first base element (10) such that its position can be varied by rotation about an axis substantially perpendicular to said resting surface (210).

2. A support fixture as claimed in claim 1, characterised in that:
the first base element (10) comprises a first substantially flat component (11) arranged to rest on the support surface (S),
and the second base element (20) comprises a substantially flat member (21) parallel to the first component (11) and defining an upper surface (210) on which the articulator (50) rests, said flat member (21) being secured to said first component (11) in a manner rotatable about an axis perpendicular to the resting surface (210).

3. A support fixture as claimed in claim 1, characterised in that the first base element (10) comprises a second substantially flat component (12) rigidly fixed to the rear edge of the first component (11) in a manner perpendicular thereto to form an L, the second component (12) being able to rest on the support surface (S) to define a second resting base for the fixture, with stable equilibrium.

4. A support fixture as claimed in claim 1, characterised in that said resting means (15) comprise a pair of feet (151) connected together by a common transverse horizontal shank (152) hinged to the front end of the first component (11), and clamping means (153) arranged to clamp the shank (152) to lock the angular position of the feet (151).

5. A support fixture as claimed in claim 1, characterised in that said fixing means (30) comprise a clamping means rigid with the flat member (21), to clamp a pair of feet (521) of the articulator.

6. A support fixture as claimed in claim 1, characterised in that said fixing means (30) comprise a clamping means for clamping either the rear feet (521) of the articulator, or a pair of columns (53) of the articulator, against a crosspiece (39) fixed to the second base element (20) and defining a line of contact with the articulator which lies at a higher level than the points of contact of said clamping means with the rear feet (521) of the articulator, or with the pair of columns (53) of the articulator.

7. A support fixture as claimed in claim 6, characterised in that said fixing means (30) comprise a horizontal crosspiece (32b) which rests on the resting surface (210) of the second base element (20) and is pulled rearwards by screw means (33, 34); the crosspiece (32b) carrying at its two ends two upwardly projecting lugs (37) positioned external to the two sides of the articulator base (52) and having one or more holes (371) through which a rod (38) is inserted to become positioned to the front of the articulator rear feet (521) or of the pair of articulator columns (53).

8. A support fixture as claimed in claim 2, characterised in that said second base element (20) comprises a pair of uprights (22) perpendicular to the resting surface (210) and rigidly fixed in an upwardly projecting manner to the rear edge of the substantially flat member (21), and a support bracket (25) hinged about a transverse horizontal axis to the upper ends of said uprights (22) and projecting forwards above the upper jaw (55) of the articulator; the angular position of the bracket (25) in relation to the uprights (22) being variable and lockable, the bracket (25) being able to rest on the support surface (S) to define at least one resting point which, together with the upper ends of the second component (12), defines a third resting base with stable equilibrium for the fixture.

9. A support fixture as claimed in claim 8, characterised by comprising means (26) for locking the support bracket (25) in the desired angular position.

10. A support fixture as claimed in claim 8, characterised in that said support bracket (25) is able to support the upper jaw (55) in a position adjustable at will, for example by securing this latter to it by a usual elastic tie (27).

11. A support fixture as claimed in claim 3, characterised by comprising a flat screen (45) fixed to the second component (12) of the first base element (10) in a manner perpendicular to the vertical plane of symmetry, and comprising a vertical line (V) positioned on its intersection with said plane of symmetry, and a horizontal line (O) adjustably positioned on its intersection with the occlusal plane (P).
